# EUROPÄISCHE PATENTANMELDUNG

(11) **EP 4 631 753 A1**
(43) Veröffentlichungstag der Anmeldung: **15.10.2025**
(21) Anmeldenummer: 25169485.7
(22) Anmeldetag: 09.04.2025
(51) Int. Cl.: B60H 1/32, B60H 1/00

(54) **KLIMATISIERUNGSSYSTEM FÜR EIN FAHRZEUG**

(30) Priorität: 09.04.2024 DE 102024109861
(71) Anmelder: OET GmbH, 6890 Lustenau (AT)
(72) Erfinder: Busch, Christian, 6890 Lustenau (AT); Amann, Thomas, 6890 Lustenau (AT); Bont, Jochen, 6890 Lustenau (AT)
(74) Vertreter: Keller Schneider Patentanwaltsgesellschaft mbH

(57) **Zusammenfassung**

Die Erfindung betrifft ein Klimatisierungssystem, insbesondere für Fahrzeuge, insbesondere Elektro- oder Hybridfahrzeuge, mit einem Kompressor (10) und wenigstens einem Wärmetauscher (20, 30), der zur Bildung eines Kältemittelkreislaufs mit dem Kompressor (10) fluiddicht verbunden ist, wobei der Kompressor (10) ein Gehäuse (11) aufweist, in dem eine Verdichtereinheit (12) zum Verdichten des Kältemittels angeordnet ist, wobei das Gehäuse (11) auf einer Saugseite der Verdichtereinheit (12) einen Ansaugbereich (13) und auf einer Druckseite der Verdichtereinheit (12) einen Hochdruckbereich (14) aufweist, und wobei der wenigstens eine Wärmetauscher (20, 30) mit dem Ansaugbereich (13) und/oder dem Hochdruckbereich (14) gekoppelt ist. Die Erfindung zeichnet dadurch aus, dass der Wärmetauscher (20, 30) so an dem Kompressor (10) befestigt ist, dass der Kompressor (10) den Wärmetauscher (20, 30) mechanisch trägt, wobei zwei Wärmetauscher (20, 30) vorgesehen sind, und wobei ein erster Wärmetauscher (20) mit dem Ansaugbereich (13) und ein zweiter Wärmetauscher (30) mit dem Hochdruckbereich (14) des Kompressors (10) fluiddicht verbunden ist.

## Beschreibung

Die Erfindung betrifft ein Klimatisierungssystem, insbesondere für Fahrzeuge, insbesondere für ein Elektro- oder Hybridfahrzeug, gemäß dem Oberbegriff des Patentanspruchs 1. Ferner betrifft die Erfindung ein Fahrzeug mit einem solchen Klimatisierungssystem.

Ein Klimatisierungssystem der eingangs genannten Art ist beispielsweise aus US 2019/0039440 A1 bekannt. Das bekannte Klimatisierungssystem wird insbesondere in Fahrzeugen eingesetzt, um eine Fahrzeugklimaanlage zu betreiben. Die Hauptkomponenten des Klimatisierungssystems sind ein Kompressor und wenigstens ein Wärmetauscher, wobei der Wärmetauscher mit dem Kompressor fluiddicht verbunden ist. Die Verbindung erfolgt bei bekannten Klimatisierungssystemen mittels Schläuchen. Gleichzeitig sind mechanische Verbindungen zwischen dem Kompressor und dem Wärmetauscher vorgesehen. Üblicherweise ist dazu eine Halteplatte vorgesehen, an welcher sowohl der Kompressor, als auch der Wärmetauscher montierbar ist. Eine solche Halteplatte ist auch bei dem Klimatisierungssystem gemäß CN 111 811 153 A vorgesehen.

Eine Weiterentwicklung derartiger Klimatisierungssysteme ist in der auf die Anmelderin zurückgehenden DE 10 2020 109 006 A1 beschrieben. Dabei ist ebenfalls eine Halteplatte vorgesehen, die den Kompressor und den wenigstens einen Wärmetauscher mechanisch trägt. Gleichzeitig dient die Halteplatte jedoch auch als Fluidverbindung zwischen dem Wärmetauscher und dem Kompressor. Auf zusätzliche Rohrleitungen wird so verzichtet.

Ein ähnliches Klimatisierungssystem ist in DE 10 2023 118 683 A1 beschrieben, bei welchem an einem Gehäuse eines Kompressors ein Ventilblock angeschraubt ist. An den Ventilblock ist ferner ein Wärmetauscher fixiert. Zusätzlich ist der Wärmetauscher an dem Gehäuse des Kompressors befestigt. Der Ventilblock fungiert hier im Wesentlichen als Halteplatte.

Klimatisierungssysteme der hier beschriebenen Art werden üblicherweise für unterschiedliche Fahrzeuge eingesetzt. Die Steuerung des Klimatisierungssystems erfolgt dabei mittels des fahrzeugseitigen Steuergeräts. Sensoren und der Motor des Klimatisierungssystems werden dazu mit dem fahrzeugseitigen Steuergerät verbunden.

Die bisherigen Klimatisierungssysteme werden daher speziell für den jeweiligen Fahrzeugtyp angepasst, einerseits im Hinblick auf den im jeweiligen Fahrzeugtyp verfügbaren Bauraum und andererseits im Hinblick auf die sich von Fahrzeugtyp zu Fahrzeugtyp unterscheidenden Steuergeräte. Mithin werden für unterschiedliche Fahrzeugtypen verschiedene Klimatisierungssysteme entwickelt und produziert. Das ist aufwändig und kostenintensiv.

Die Aufgabe der Erfindung besteht darin, ein Klimatisierungssystem zu entwickeln, welches sich universell in verschiedene Fahrzeugtypen integrieren lässt, wobei der Anpassungsbedarf am Fahrzeug selbst gering ist. Ferner soll das Klimatisierungssystem kompakt und einfach montierbar sein. Eine weitere Aufgabe der Erfindung besteht darin, ein Fahrzeug mit einem solchen Klimatisierungssystem anzugeben.

Erfindungsgemäß wird diese Aufgabe im Hinblick auf das Klimatisierungssystem durch den Gegenstand des Patentanspruchs 1 und im Hinblick auf das Fahrzeug durch den Gegenstand des Patentanspruchs 14 gelöst.

So beruht die Erfindung auf dem Gedanken, ein Klimatisierungssystem für ein Fahrzeug, insbesondere ein Elektro- oder Hybridfahrzeug, mit einem Kompressor und wenigstens einem Wärmetauscher anzugeben, wobei der Wärmetauscher zur Bildung eines Kältemittelkreislaufs mit dem Kompressor fluiddicht verbunden ist. Der Kompressor weist ferner ein Gehäuse auf, in dem eine Verdichtereinheit zum Verdichten des Kältemittels angeordnet ist. Das Gehäuse weist außerdem auf einer Saugseite der Verdichtereinheit einen Ansaugbereich und auf einer Druckseite der Verdichtereinheit einen Hochdruckbereich auf. Der wenigstens eine Wärmetauscher ist mit dem Ansaugbereich und/oder dem Hochdruckbereich gekoppelt. Erfindungsgemäß ist der Wärmetauscher so an dem Kompressor befestigt, dass der Kompressor den Wärmetauscher mechanisch trägt.

Die Erfindung beruht auf der Idee, die Kompaktheit des Klimatisierungssystems zu erhöhen, indem auf zusätzliche Halteplatten zur Verbindung von Kompressor und Wärmetauschern verzichtet wird. Vielmehr ist der Wärmetauscher direkt an dem Kompressor befestigt. Der Kompressor, insbesondere dessen Gehäuse, dient als tragendes Element des Klimatisierungssystems. Das Klimatisierungssystem kann so eine einheitliche kompakte Baugruppe bilden, die universell in unterschiedliche Fahrzeugtypen integrierbar ist. Wegen des hohen Grads der Kompaktheit bestehen wenig Limitierungen im Hinblick auf den verfügbaren Bauraum in unterschiedlichen Fahrzeugtypen. Besonders vorteilhaft ist an dem kompakten Aufbau des Klimatisierungssystems, dass damit das notwendige Kältemittelvolumen limitiert ist. Es ist im Vergleich zu bekannten Klimatisierungssystem erheblich weniger Kältemittel notwendig. Das viele, insbesondere effiziente, Kältemittel brennbar sind, wird durch das erfindungsgemäße Klimatisierungssystem, das mit einer sehr geringen Menge eines solchen brennbaren Kältemittels auskommt, die Brandgefahr reduziert.

Erfindungsgemäß sind bei dem Klimatisierungssystem zwei Wärmetauscher vorgesehen, wobei ein erster Wärmetauscher mit dem Ansaugbereich und ein zweiter Wärmetauscher mit dem Hochdruckbereich des Kompressors fluiddicht verbunden ist. Der mit dem Ansaugbereich verbundene erste Wärmetauscher bildet dabei vorzugsweise einen Verdampfer, insbesondere einen sogenannten Chiller, der das Kältemittel im Kältemittelkreislauf verdampft und damit in einen gasförmigen Zustand überführt. Dadurch kann das Kühlmittel des Kühlmittelkreislauf eines Fahrzeugs abgekühlt werden. Der zweite Wärmetauscher, der mit dem Hochdruckbereich des Kompressors fluiddicht verbunden ist, kann hingegen einen Kondensator bilden, der das im Kompressor verdichtete und erhitzte Kältemittel verflüssigt und dabei die im verdichteten Kältemittel enthaltene Wärme an einen Kühlmittelkreislauf eines Fahrzeugs übergibt, somit das Kühlmittel erwärmt. Es ist auch möglich, die Funktionen der beiden Wärmetauscher umzukehren. Das Klimatisierungssystem kann folglich nicht nur zum Kühlen eines Kühlmittels in einem Kühlmittelkreislauf, sondern auch zu dessen Erwärmung eingesetzt werden. Im Wesentlichen kann das Klimatisierungssystem nach dem Wärmepumpenprinzip betrieben werden, wobei alternierend sowohl eine Heizfunktion als auch eine Kühlfunktion bereitgestellt werden kann.

Ein wesentlicher Vorteil des erfindungsgemäßen Klimatisierungssystems besteht darin, dass ein hoher Grad der Kompaktheit erreicht wird. Dies kann dadurch gefördert werden, dass der Wärmetauscher, insbesondere jeweils der erste Wärmetauscher und/oder der zweite Wärmetauscher, wenigstens einen Fluidanschluss aufweist, der direkt und fluiddicht mit einem Fluidanschluss des Kompressors verbunden ist. Die direkte und fluiddichte Verbindung zwischen dem Fluidanschluss des Wärmetauschers und dem Fluidanschluss des Kompressors kann insbesondere adapterfrei erfolgen. Mit anderen Worten kann der Kompressor so gestaltet sein, dass er eine unmittelbare Verbindung zum Wärmetauscher zulässt, ohne dass entsprechende Adapter erforderlich sind. Auf diese Weise kann der Wärmetauscher sehr nahe an dem Kompressor montiert werden, sodass ein besonders kompaktes Modul entsteht.

Insofern ist es bevorzugt, wenn zwischen dem Kompressor und dem Wärmetauscher ein Fluidkanal ausgebildet ist, der höchstens eine, insbesondere eine einzige, Verbindungsstelle aufweist. Die Verbindungsstelle kann, insbesondere mittels einer Dichtung, fluiddicht abgedichtet sein. Die Begrenzung auf eine, insbesondere eine einzige, Verbindungsstelle reduziert die Gefahr von Leckagen. Gleichzeitig wird die Montage vereinfacht. Die Bauteilkomplexität des Klimatisierungssystems wird außerdem reduziert. Das wiederum trägt zu einer kompakten Gestaltung des Klimatisierungssystems bei.

Bei einer bevorzugten Ausführungsform des erfindungsgemäßen Klimatisierungssystems ist der Wärmetauscher durch mechanische Verbindungseinrichtungen an dem Kompressor direkt befestigt, wobei integral am Kompressor und/oder am Wärmetauscher Aufnahmen für die direkte kraft- und/oder formschlüssige Aufnahme der Verbindungseinrichtungen ausgebildet sind. Durch die direkte Verbindung bzw. Befestigung des Wärmetauschers am Kompressor wird der Kompressor vorzugsweise zum tragenden Bauteil des Klimatisierungssystems. Die bei bisher bekannten Klimatisierungssystemen getrennten Funktionen, nämlich die Funktion des Tragens der relevanten Komponenten des Klimatisierungssystems und die Funktion der Kältemittelkompression, sind bei dieser Ausführungsform des Klimatisierungssystems im Kompressor kombiniert. Damit werden zusätzliche Bauteile eingespart.

Eine einfache Montage sowie eine erleichterte Wartung werden erreicht, wenn die Verbindungseinrichtungen Schrauben aufweisen. Vorteilhafterweise kann wenigstens eine Schraube, insbesondere eine Befestigungsschraube, in ein Gewinde eingreifen, das direkt in dem Gehäuse des Kompressors und/oder in einem Anschlussstück des Wärmetauschers ausgebildet ist.

Der Wärmetauscher kann vorzugsweise mit wenigstens zwei, insbesondere drei, Schrauben an dem Kompressor befestigt sein, wobei eine Anschlussschraube in ein Anschlussgewinde eingreift, das in das Anschlussstück des Wärmetauschers integriert ist. Wenigstens eine Befestigungsschraube kann in jeweils ein Befestigungsgewinde eingreifen, das in das Gehäuse des Kompressors integriert ist. Die Nutzung einer Anschlussschraube einerseits und einer Befestigungsschraube andererseits erleichtert die Montage des Klimatisierungssystems. Wegen des hohen Grads der Kompaktheit ist auch der zur Verfügung stehende Raum für eine Montage der einzelnen Komponenten des Klimatisierungssystems begrenzt. Indem die Anschlussschraube in ein Anschlussgewinde des Wärmetauschers eingreift und die Befestigungsschraube in ein Befestigungsgewinde des Befestigungsgehäuses, wird sichergestellt, dass sowohl die Anschlussschraube als auch die Befestigungsschraube gut zugänglich sind. Gleichzeitig wird durch die gegenläufige Verschraubung auch eine besonders hohe Stabilität sichergestellt.

Vorteilhaft ist es darüber hinaus, wenn zumindest ein Teil der Verbindungseinrichtungen Vibrationsdämpfer aufweist. Die Vibrationsdämpfer können jeweils zwischen einem Schraubenkopf und dem Wärmetauscher oder dem Kompressor angeordnet sein. Besonders bevorzugt ist es, wenn die Vibrationsdämpfer als Kunststoff- oder Gummidämpfer ausgebildet sind. Die Vibrationsdämpfer bewirken eine Schwindungsentkopplung zwischen dem Wärmetauscher und dem Kompressor, so dass im Kompressor erzeugte Vibrationen nicht an den Wärmetauscher übertragen werden. Durch die Vibrationsdämpfer wird die Übertragung von Schwingungen aus dem Kompressor an den Wärmetauscher gedämpft oder unterbunden, die andernfalls durch den Wärmetauscher eine Resonanz erfahren und zu akustischen Beeinträchtigungen führen könnten.

Bei einer besonders bevorzugten Variante der Erfindung bildet der Kompressor mit dem wenigstens einen Wärmetauscher ein einheitlich handhabbares Modul, das über eine Halteeinrichtung mit dem Fahrzeug verbindbar ist, wobei die Halteeinrichtung vom Kältemittelkreislauf unabhängig ausgebildet ist. Insbesondere kann der Kompressor mit den beiden Wärmetauschern ein einheitlich handhabbares Modul bilden. Bevorzugt ist jedenfalls, wenn die Anbindung des Kompressors bzw. des Klimatisierungssystems an das Fahrzeug über eine separate Halteeinrichtung erfolgt. Die Halteeinrichtung hat vorzugsweise ausschließlich die Funktion, den Kompressor und/oder das Klimatisierungssystem, mit dem Fahrzeug zu verbinden. Die Halteeinrichtung dient insbesondere nicht dazu, die Wärmetauscher mit dem Kompressor zu verbinden. Vielmehr ist das Klimatisierungssystem bzw. -modul selbsttragend gestaltet, wobei der Kompressor, insbesondere dessen Gehäuse, die tragende Funktion für den wenigstens einen Wärmetauscher übernimmt.

Vorteilhaft ist es, wenn auch zwischen dem Kompressor und der Halteeinrichtung wenigstens ein Vibrationsdämpfer angeordnet ist. Der Vibrationsdämpfer dient dazu, die Übertragung von Vibrationen aus dem Kompressor an das Fahrzeug zu unterbinden.

Das Klimatisierungssystem kann in bevorzugten Ausführungsformen in einem virtuellen Quader eingepasst sein, der folgende Abmessungen aufweist:
- Länge zwischen 200 mm und 250 mm, insbesondere zwischen 210 mm und 240 mm, insbesondere zwischen 230 mm und 235 mm;
- Breite zwischen 180 mm und 220 mm, insbesondere zwischen 190 mm und 215 mm, insbesondere zwischen 200 mm und 210 mm; und
- Tiefe zwischen 250 mm und 300 mm, insbesondere zwischen 260 mm und 290 mm, insbesondere zwischen 270 mm und 280 mm.

Vorzugsweise sind in den virtuellen Quader neben dem Kompressor und den beiden Wärmetauschern auch alle elektrischen, elektronischen und flüssigkeitsführenden Anschlüsse eingepasst, die zur Einbindung des Klimatisierungssystems in ein Fahrzeug erforderlich sind. Insbesondere ist der vollständige, geschlossene Kältemittelkreis in dem virtuellen Quader eingepasst.

In einer weiteren bevorzugten Ausführungsform kann vorgesehen sein, dass im Ansaugbereich des Gehäuses eine Sensoraufnahme zum Aufnehmen eines Druck- und/oder Temperatursensors angeordnet ist. Mithin ist also vorgesehen, dass der Druck- und/oder Temperatursensor unmittelbar im Ansaugbereich, d.h. saugseitig nahe an der Verdichtereinheit, positionierbar ist. In Anhängigkeit des Betriebszustands des Kompressors erwärmt sich das Kältemitte im Ansaugbereich unterschiedlich stark. Durch den dort positionierten Druck und/oder Temperatursensor können diese Schwankungen gut gemessen werden, so dass steuerungstechnisch darauf reagiert werden kann. Der Kompressor kann so näher am Temperaturmaximum des Kältemittels betrieben werden, ohne eine Überhitzung des Kältemittels zu riskieren. Das erhöht die Effizienz des Kompressors.

Ferner kann der Kompressor ein in dem Gehäuse angeordnetes internes Steuergerät aufweisen, das zumindest dazu ausgebildet ist, mindestens einen, vorzugsweise mehrere, Druck- und/oder Temperatursensoren und ein Expansionsventil des Kompressors zu steuern und/oder zu regeln. Das Expansionsventil kann insbesondere ein thermisches Expansionsventil sein, dessen Öffnungsgrad sich mittels eines internen Temperaturfühlers selbständig in Abhängigkeit der Kältemitteltemperatur einstellt.

Bei einer bevorzugten Variante des Klimatisierungssystems bildet das interne Steuergerät, insbesondere mit dem mindestens einen Druck- und/oder Temperatursensor, einen autarken Steuer- und/oder Regelkreis zum, insbesondere vollständigen, Steuern und/oder Regeln der Kälteleistung und/oder Heizleistung aus. Das Klimatisierungssystem bzw. - modul ist auf diese Weise autark, d.h. es kann unabhängig von einer Motorsteuerung betrieben werden.

Das Gehäuse kann mehrere, insbesondere voneinander abgetrennte, Funktionsräume umfassen. Konkrekt kann das Gehäuse einen Elektronikraum mit dem internen Steuergerät, einen Antriebsraum mit einem Elektromotor und einen Verdichterraum mit der Verdichtereinheit aufweisen. Vorzugsweise befindet sich der Antriebsraum zwischen dem Elektronikraum und dem Verdichterraum. Der Verdichterraum kann ferner zwischen dem Antriebsraum und einem Gehäusedeckel angeordnet sein. Im Gehäusedeckel kann der Hochdruckbereich ausgebildet sein. Der Ansaugbereich kann im Antriebsraum angeordnet sein.

Vorzugsweise bildet der Kompressor mit den Wärmetauschern ein autarkes Modul, das über das interne Steuergerät dazu ausgebildet ist, den Kältekreislauf dezentral von einer Fahrzeugsteuerung zu regeln. Damit wird ermöglicht, dass das Klimatisierungssystem ohne aufwändige Anpassungen in unterschiedliche Fahrzeugtypen integrierbar ist. Vorzugsweise werden alle für die Steuerung des Klimatisierungssystems erforderlichen elektronischen Funktionen, insbesondere die Auswertung von internen Sensoren, beispielweise dem Druck- und/oder Temperatursensor, und die Ansteuerung des Elektromotors zur Einstellung der Kompressorleistung durch das interne Steuergerät ausgeführt. Der Kältemittelkreislauf ist somit vollständig autark betreibbar. Insbesondere ist die Kälteleistung oder Heizleistung unabhängig von einer externen, insbesondere fahrzeugseitigen, Steuerung einstellbar.

Der Kompressor kann eine, insbesondere mit einem Fahrzeug verbindbare, zentrale Kommunikationsschnittstelle zum Datentransfer aufweisen, wobei die zentrale Kommunikationsschnittstelle mit dem internen Steuergerät signaltechnisch verbunden ist. Die Kommunikationsschnittstelle dient dem Datenaustausch zwischen dem internen Steuergerät und dem fahrzeugseitigen Steuergerät. Vorzugsweise nutzt die Kommunikationsschnittstelle ein standardisiertes Übertragungsprotokoll, insbesondere ein CAN-Bus-Protokoll. Die Kommunikationsschnittstelle ermöglicht so die Übertragung von Betriebsdaten des Klimatisierungsgeräts an das fahrzeugseitige Steuergerät. Umgekehrt können fahrzeugseitige Daten, wie eine Kälte- oder Wärmeanforderung, vom fahrzeugseitigen Steuergerät über die Kommunikationsschnittstelle an das interne Steuergerät übermittelt werden. Diese fahrzeugseitigen Daten dienen als Eingangsparameter für das interne Steuergerät, enthalten jedoch vorzugsweise keine Steueranweisungen für das Klimatisierungssystem. Solche Steueranweisungen werden vielmehr, insbesondere ausschließlich, vom internen Steuergerät ausgegeben, wobei die fahrzeugseitigen Daten berücksichtigt werden.

Der Kompressor ist vorteilhafterweise ausschließlich mittels der zentralen Kommunikationsschnittstelle mit dem Fahrzeug signaltechnisch verbunden. Die zentrale Kommunikationsschnittstelle kann als räumliche und bauliche Einheit ausgebildet sein und der gesamte Datentransfer in den und aus dem Kompressor über die zentrale Kommunikationsschnittstelle erfolgen. Dies sorgt neben einem kompakten, autarken und einfachen Aufbau zusätzlich für eine Vereinfachung der Montage des Klimatisierungssystems in einem Fahrzeug.

In vorteilhaften Varianten des Klimatisierungssystems ist die Sensoraufnahme in den Ansaugbereich des Gehäuses des Kompressors hineinreichend angeordnet. Damit ist auf besondere Weise sichergestellt, dass präzise Messdaten des in die Verdichtereinheit eingesaugten Kältemittels bei unterschiedlichen Betriebszuständen vorliegen, wodurch eine effiziente Steuerung des Klimatisierungssystems erreicht wird.

Vorzugsweise sind auf der Druckseite mindestens eine, insbesondere zwei, weitere Sensoraufnahmen zum Aufnehmen mindestens eines weiteren Druck- und/oder Temperatursensors angeordnet. Mit derart positionierten, weiteren Druck- und/oder Temperatursensoren wird die Datenbasis für die Regelung im Steuergerät vorteilhaft erweitert. So kann die Verdichtereinheit weiter optimiert betrieben werden. Insbesondere kann die Eingangstemperatur des Kältemittels vor dem Einsaugen in die Verdichtereinheit mit der Ausgangstemperatur des Kältemittels nach dem Auslassen aus der Verdichtereinheit verglichen werden. Die Verdichtereinheit bzw. der sie antreibende Elektromotor und das Expansionsventil können von der internen Steuerung auf dieser Grundlage besonders effizient angesteuert werden, ohne eine Überhitzung des Kältemittels zu riskieren. Die Gesamteffizienz des Klimatisierungssystems kann so gesteigert werden. Ein internes Steuergerät hat dabei insbesondere gegenüber einer fahrzeugseitigen Steuerung des Klimatisierungssystem erhebliche Vorteile, weil das interne Steuergerät auf die Komponenten des Klimatisierungssystems angepasst sein kann.

Bei dem Klimatisierungssystem kann ein erster Wärmetauscher mit dem Ansaugbereich und ein zweiter Wärmetauscher mit dem Hochdruckbereich gekoppelt sein. Zumindest der mit dem Hochdruckbereich gekoppelte Wärmetauscher weist vorzugsweise ein Anschlussstück mit einem Fluidanschluss auf, der vorzugsweise direkt, insbesondere adapterfrei, und fluiddicht mit einem Fluidanschluss des Kompressors verbunden ist, wobei in dem Anschlussstück zumindest eine der weiteren Sensoraufnahmen zum Aufnehmen des mindestens einen weiteren Druck- und/oder Temperatursensors angeordnet ist.

Das Klimatisierungssystem kann mindestens einen, vorzugsweise zwei, Druck- und/oder Temperatursensoren, insbesondere Kombisensoren, umfassen. Generell können die hier beschriebenen Druck- und/oder Temperatursensoren reine Drucksensoren, reine Temperatursensoren oder kombinierte Sensoren umfassen, die sowohl einen Fluiddruck als auch eine Fluidtemperatur des Kältemittels erfassen können.

Generell kann das Klimatisierungssystem mit einem Kältemittel betrieben werden, das durch den Kompressor von einem gasförmigen Zustand in einen flüssigen Zustand überführbar ist. Das Kältemittel kann brennbar sein. Insofern ist es bevorzugt, wenn der Kältemittelkreislauf vollständig geschlossen, insbesondere gegenüber der Umwelt abgedichtet ist. Insbesondere können Kältemittel aus Kohlenwasserstoffverbindungen, beispielsweise Propan (R290), Isobutan (R600a), n-Butan (R600) oder Mischungen davon, eingesetzt werden. Wegen der Brennbarkeit von Kohlenwasserstoffverbindungen ist die Füllmenge an Kältemittel im gesamten Kältemittelkreislauf des Klimatisierungssystems vorzugsweise auf 250 g, insbesondere weniger als 200 g, insbesondere weniger als 150 g, begrenzt. So wird bei beim Einsatz des Klimatisierungssystems in einem Fahrzeug im Falle eines Unfalls vermieden, dass durch das brennbare Kältemittel ein hohes Sicherheitsrisiko entsteht.

Ein nebengeordneter Aspekt der Erfindung betrifft ein Fahrzeug, insbesondere Elektrofahrzeug oder Hybridfahrzeug, mit einem zuvor beschriebenen Klimatisierungssystem. Die im Zusammenhang mit dem Klimatisierungssystem genannten Vorteile und bevorzugten Weiterbildungen gelten entsprechend auch für das mit dem Klimatisierungssystem ausgestattete Fahrzeug. Fahrzeuge im Sinne der vorliegenden Anmeldung sind vorzugsweise mehrspurige Kraftfahrzeuge, die mit einem eigenen Antrieb für die Vorwärtsbewegung ausgestattet sind. Das Klimatisierungssystem lässt sich grundsätzlich jedoch auch in Züge, Schiffe oder nicht-angetriebene Fahrzeuge, wie Anhänger, integrieren oder in stationären Anwendungen einsetzen.

Die Erfindung wird im Folgenden anhand eines Ausführungsbeispiels unter Bezugnahme auf die beigefügten, schematischen Zeichnungen näher erläutert. Darin zeigen
- Fig. 1: eine perspektivische Darstellung eines erfindungsgemäßen Klimatisierungssystems nach einem bevorzugten Ausführungsbeispiel;
- Fig. 2: eine weitere perspektivische Darstellung des Klimatisierungssystems gemäß Fig. 1;
- Fig. 3: eine weitere perspektivische Darstellung des Klimatisierungssystems gemäß Fig. 1, wobei zusätzlich eine Halteeinrichtung zur Anbindung an ein Fahrzeug vorgesehen ist;
- Fig. 4: eine Vorderansicht des Klimatisierungssystems mit Halteeinrichtung gemäß Fig. 3;
- Fig. 5: eine Rückansicht des Klimatisierungssystems mit Halteeinrichtung gemäß Fig. 3;
- Fig. 6: eine Frontansicht eines Wärmetauschers, insbesondere des ersten Wärmetauschers, des Klimatisierungssystems gemäß Fig. 1;
- Fig. 7: eine Seitenansicht des Wärmetauschers gemäß Fig. 6; und
- Fig. 8: eine Querschnittsansicht des Wärmetauschers gemäß Fig. 6 entlang der Linie B-B.

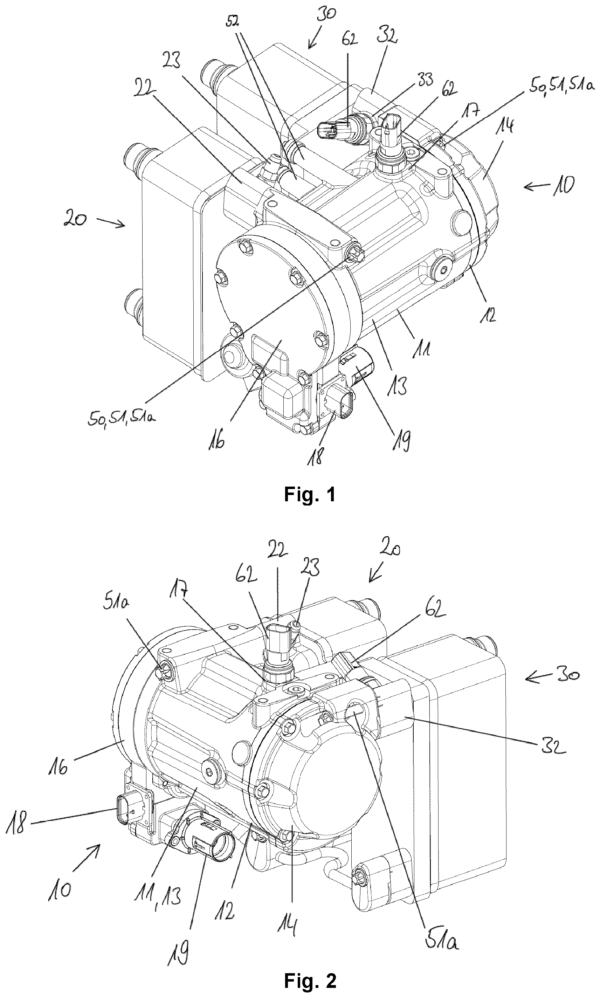

Fig. 1 zeigt in einer perspektivischen Darstellung ein Klimatisierungssystem, das als kompaktes, einheitlich handhabbares Modul ausgebildet ist. Das Modul umfasst vorzugsweise alle notwendigen Bestandteile eines Kältemittelkreislaufs sowie einer Steuerung, um unabhängig von einer fahrzeugseitigen Steuerung betrieben zu werden. Das Modul ist somit universell einsetzbar und kann in Kühlmittelkreisläufe verschiedener Fahrzeuge integriert werden.

Generell gilt, dass im Rahmen der vorliegenden Anmeldung zwischen einem Kältemittelkreislauf und einem Kühlmittelkreislauf unterschieden wird. Der Kältemittelkreislauf ist ein geschlossener Kreislauf, der Kältemittel, vorzugsweise umfassend einen Kohlenwasserstoff, durch einen Kompressor 10 führt. Über einen oder mehrere Wärmetauscher 20, 30 erfolgt dann eine wärmeübertragende Kopplung zwischen dem Kältemittelkreislauf und einem fahrzeugseitigen Kühlmittelkreislauf. Der Kühlmittelkreislauf kann insbesondere ein wasserführender Kühlmittelkreislauf sein. Andere Kühlmittel sind ebenfalls einsetzbar. Als Kühlmittelkreislauf wird jedenfalls ein Kreislauf bezeichnet, der fahrzeugseitig eingebunden ist. Der Kältemittelkreislauf ist hingegen unabhängig vom Fahrzeug als geschlossener Kältemittelkreislauf bereitgestellt. Vorzugsweise umfasst das in Fig. 1 dargestellte Modul bzw. das hier beschriebene Klimatisierungssystem den Kältemittelkreislauf.

Das kompakte Klimatisierungssystem für ein Fahrzeug, das in den beigefügten Zeichnungen dargestellt ist, umfasst den Kompressor 10 sowie zwei Wärmetauscher 20, 30. Die beiden Wärmetauscher 20, 30 sind fluiddicht mit dem Kompressor 10 verbunden, um den Kältemittelkreislauf zu bilden. Der Kältemittelkreislauf ist vorzugsweise vollständig geschlossen.

Der Kompressor 10 weist ein Gehäuse auf, in dem eine Verdichtereinheit 12 angeordnet ist. Die Verdichtereinheit 12 dient zum Verdichten des Kältemittels. Das Gehäuse 11 umfasst ferner einen Ansaugbereich 13 und einen Hochdruckbereich 14. Der Ansaugbereich 13 ist auf einer Saugseite der Verdichtereinheit 12 angeordnet.

Der Hochdruckbereich 14 ist einer Druckseite der Verdichtereinheit zugeordnet.

Die Verdichtereinheit 12 saugt Kältemittel aus dem Ansaugbereich 13 an, verdichtet das Kältemittel und stößt es auf einer Druckseite in den Hochdruckbereich 14 aus. Vom Hochdruckbereich 14 gelangt das verdichtete Kältemittel in einen der Wärmetauscher 20, 30, insbesondere den zweiten Wärmetauscher 30. Während das verdichtete Kältemittel den zweiten Wärmetauscher 30 durchströmt, entspannt es und geht in den darmpfförmigen Zustand über. Dabei entzieht es dem Kühlmittel eines mit dem zweiten Wärmetauschers 30 verbundenen Kühlmittelkreislaufs Wärme, so dass das Kühlmittel abgekühlt wird. Der zweite Wärmetauscher 30 bildet insofern einen Verdampfer für das Kältemittel. Vom zweiten Wärmetauscher 30 gelangt das dampfförmige Kältemittel in den ersten Wärmetauscher 20. Im ersten Wärmetauscher 20, der vorzugsweise einen Kondensator bildet, wird das Kältemittel wieder heruntergekühlt und verflüssigt. Dabei gibt es Wärme an ein Kühlmittel ab, das ebenfalls den ersten Wärmetauscher 20 durchströmt. Während das Kältemittel abgekühlt wird, erwärmt sich also das Kühlmittel. Das abgekühlte und verflüssigte Kältemittel gelangt dann vom ersten Wärmetauscher 20 in den Ansaugbereich 13. Zwischen dem zweiten Wärmetauscher 30 und dem ersten Wärmetauscher 20 kann ein Expansionsventil angeordnet sein. Damit ist der Kältemittelkreislauf geschlossen.

Generell ist in Fig. 1 erkennbar, dass der Kompressor 10, der vorzugsweise als Scrollkompressor ausgebildet ist, mehrere Bereiche aufweist. Neben dem Ansaugbereich 13 und dem Hochdruckbereich 14 umfasst das Gehäuse 11 einen Anschlussbereich 16. Im Anschlussbereich 16 ist vorzugsweise ein internes Steuergerät untergebracht. Das interne Steuergerät ist dabei baulich, insbesondere fluiddicht, vom Ansaugbereich 13 getrennt.

Der Ansaugbereich 13 ist in einem Antriebsraum des Gehäuses 11 angeordnet. Der Antriebsraum nimmt vorzugsweise einen Elektromotor auf, der die Verdichtereinheit antreibt. Alternativ ist es auch möglich, dass der Ansaugbereich 13 den Elektromotor umgeht, d.h. das Kältemittel durch die Verdichtereinheit aus einem Ansaugbereich 13 angesaugt wird, der vom Elektromotor räumlich getrennt ist.

Der Hochdruckbereich 14 ist vorzugsweise im Deckel des Gehäuses 11 ausgebildet ist und kann eine Hochdruckkammer umfassen, in der sich das durch die Verdichtereinheit 12 komprimierte Kältemittel zunächst sammelt, bevor es dann an den zweiten Wärmetauscher 30 geleitet wird.

Der erste Wärmetauscher 20 weist ein Anschlussstück 22 auf, das direkt mit einem Fluidanschluss des Kompressors 10 verbunden ist. Das Anschlussstück 22 des ersten Wärmetauschers 20 ist vorzugsweise einstückig mit dem ersten Wärmetauscher 20 ausgebildet. Insoweit ist das Anschlussstück 22 des ersten Wärmetauschers 20 integraler Bestandteil des ersten Wärmetauschers 20. Der erste Wärmetauscher 20 ist so direkt fluiddicht mit dem Kompressor 10, insbesondere dessen Gehäuse 11 verbunden. Die Anbindung erfolgt im Ansaugbereich 13.

Analog dazu weist der zweite Wärmetauscher 30 ein Anschlussstück 32 auf. Das Anschlussstück 32 des zweiten Wärmetauschers 30 ist integral mit dem zweiten Wärmetauscher 30 ausgebildet. Das Anschlussstück 32 ist unmittelbar mit einem Fluidanschluss des Kompressors 10, insbesondere dessen Gehäuse 11, verbunden. Insbesondere ist auf diese Weise der zweite Wärmetauscher 30 direkt fluiddicht mit dem Kompressor 10 verbunden.

In Fig. 1 ist außerdem erkennbar, dass der Kompressor 10 zwei Sensoraufnahmen 17, 33 aufweist, die jeweils einen Druck- und/oder Temperatursensor 62 aufnehmen. Die Sensoraufnahmen 17, 33 sind im Gehäuse 11 des Kompressors 10 ausgebildet. Eine erste Sensoraufnahme 17 ist im Ansaugbereich 13 des Gehäuses 11 angeordnet. Insbesondere ist vorgesehen, dass die erste Sensoraufnahme 17 unmittelbar auf der Saugseite nahe der Verdichtereinheit 12 positioniert ist. Die zweite Sensoraufnahme 33 ist hingegen im Anschlussstück 32 des zweiten Wärmetauschers 30 positioniert. Damit ist die zweite Sensoraufnahme 33 unmittelbar nach dem Hochdruckbereich 14 positioniert. Die Positionen der beiden Sensoraufnahmen 17, 33 wirken sich positiv auf die Steuerung des Kompressors 10. Indem die Sensoraufnahmen 17, 33 nahe an der Verdichtereinheit 12 positioniert sind, werden sehr exakte Messdaten erfasst, die zu einer verbesserten Steuerung des Kompressors 10 führen. Insbesondere kann so die Effizienz des Klimatisierungssystems erhöht werden.

In Fig. 1 ist außerdem die mechanische Anbindung der Wärmetauscher 20, 30 an den Kompressor 10 erkennbar. So ist der erste Wärmetauscher 20 über mehrere Verbindungseinrichtungen 50 direkt mechanisch mit dem Kompressor 10 gekoppelt. Insbesondere ist der erste Wärmetauscher 20 direkt mit dem Gehäuse 11 des Kompressors 10 fluiddicht einerseits und mechanisch andererseits verbunden. Die mechanische Verbindung erfolgt über die Verbindungseinrichtungen 50, die jeweils Schrauben 51 umfassen.

Wie aus den Fig. 1 und 5 bzw. 4 und 5 in der Zusammenschau erkennbar ist, weist der erste Wärmetauscher 20 drei Verbindungseinrichtungen 50 auf. Die Verbindungseinrichtungen 50 umfassen jeweils eine Schraube, wobei im Rahmen der Anmeldung zwischen Anschlussschrauben 51a und Befestigungsschrauben 51b unterschieden wird. Konkret ist der erste Wärmetauscher 20 mit einer Anschlussschraube 51a und zwei Befestigungsschrauben 51b fixiert. Die Anschlussschraube 51a erstreckt sich durch eine Öffnung im Gehäuse 11 des Kompressors 10 und greift in ein Anschlussgewinde ein, das in dem Anschlussstück 22 des ersten Wärmetauschers 20 ausgebildet ist. Die Verschraubung erfolgt also von der Kompressorseite, wobei der form- und kraftschlüssige Eingriff in ein entsprechendes Gewinde im Anschlussstück 22 des ersten Wärmetauschers 20 erfolgt.

Die weitere Fixierung des ersten Wärmetauscher 20 am Kompressor 10 erfolgt über die Befestigungsschrauben 51b. Diese durchgreifen Befestigungsösen 55 des ersten Wärmetauschers 20 und sind form- und kraftschlüssig mit jeweils einem Befestigungsgewinde verbunden, das im Gehäuse 11 des Kompressors 10 ausgebildet ist. Die Verschraubung des ersten Wärmetauschers 20 mit dem Kompressor 10 über die Befestigungsschrauben 51b erfolgt also ausgehend von der Wärmetauscherseite.

Für alle Verbindungseinrichtungen 50 gilt vorteilhaft, dass deren Schrauben 51 jeweils einen Schraubenkopf 53 umfassen, wobei zwischen dem Schraubenkopf 53 und der Befestigungsöse 55 bzw. dem Gehäuse 11 des Kompressors 10 jeweils ein Vibrationsdämpfer 54 vorgesehen ist. Der Vibrationsdämpfer 54 kann im Wesentlichen als Gummischeibe oder Kunststoffscheibe ausgebildet sein. Der Vibrationsdämpfer 54 sorgt für eine Vibrationsentkopplung bzw. Schwingungsentkopplung des Kompressors 10 von den Wärmetauschern 20, 30.

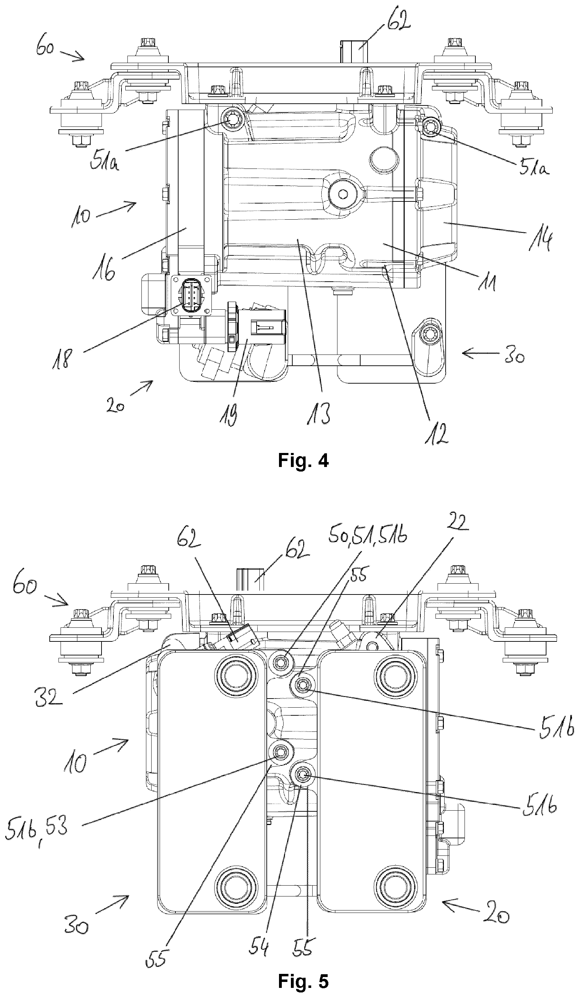

Der zweite Wärmetauscher 30 ist vorzugsweise ebenso wie der erste Wärmetauscher 20 mit dem Kompressor fest verbunden. Insbesondere erfolgt auch bei dem zweiten Wärmetauscher 30 die Verbindung über Verbindungseinrichtungen 50, die jeweils Schrauben 51 umfassen. Konkret sind auch beim zweiten Wärmetauscher 30 drei Schrauben 51, nämlich eine Anschlussschraube 51a und zwei Befestigungsschrauben 51b, vorgesehen. Die Anschlussschraube 51a durchgreift eine Öffnung im Gehäuse 11 des Kompressors 10 und gelangt mit einem Anschlussgewinde im zweiten Wärmetauscher 30 in form- und kraftschlüssigen Eingriff. Die beiden Befestigungsschrauben 51b erstrecken sich ausgehend von dem zweiten Wärmetauscher 30 durch dessen Befestigungsösen 55 in jeweils ein Befestigungsgewinde des Gehäuses 11 des Kompressors 10. Wie in Fig. 5 gut erkennbar ist, sind die Befestigungsösen 50 des ersten Wärmetauschers und die Befestigungsösen 55 des zweiten Wärmetauschers 30 so zueinander versetzt angeordnet, dass diese teilweise ineinandergreifen und damit zur Kompaktheit des Klimatisierungssystems beitragen.

Wie in Fig. 1 auch erkennbar ist, umfasst das Anschlussstück 22 des ersten Wärmetauschers 20 einen Nachfüllstutzen 23. Der Nachfüllstutzen 23 kann durch ein separates Anschlusselement gebildet sein, mit welchem ein Nachfüllen des Kältemittels ermöglicht wird. So kann sichergestellt sein, dass im Kältemittelkreislauf eine ausreichende Menge an Kältemittel enthalten ist, um eine hohe Energieeffizienz zu bewirken.

Generell kann das Klimatisierungssystem mit einem brennbaren Kältemittel betrieben werden. Insofern ist es zweckmäßig, einen vollständig geschlossenen Kältemittelkreislauf bereitzustellen. Insbesondere können Kältemittel aus Kohlenwasserstoffverbindungen, beispielsweise Propan, Propanmischungen, Isobutan, Isobutanmischungen oder ein R600-Kältemittel oder Mischungen davon eingesetzt werden. Vorzugsweise gilt für alle Ausführungsbeispiele, dass die Füllmenge an Kältemittel im gesamten Kältemittelkreislauf maximal 250 g, insbesondere weniger als 200 g, insbesondere weniger als 150 g, beträgt.

In der perspektivischen Ansicht gemäß Fig. 2 ist zusätzlich erkennbar, dass am Anschlussbereich 16 des Gehäuses 11 des Kompressors 10 Anschlüsse vorgesehen sind. Insbesondere ist eine Kommunikationsschnittstelle 18 am Anschlussbereich 16 angeordnet. Die Kommunikationsschnittstelle 18 dient zum Datentransfer und ermöglicht einen Datenaustausch zwischen einem fahrzeugseitigen und dem internen Steuergerät, welches im Anschlussbereich 16 angeordnet ist.

Im Allgemeinen kann das Gehäuse einen internen Elektronikraum aufweisen, der vorzugsweise im Anschlussbereich 16 ausgebildet ist. Im Elektronikraum ist das interne Steuergerät angeordnet, welches alle Funktionen des Klimatisierungssystems bzw. des in den Zeichnungen dargestellten Moduls steuert. Dazu kann das Steuergerät mit den Druck- und/oder Temperatursensoren 62 gekoppelt sein, die vorzugsweise als Kombisensoren ausgebildet sind. Ferner ist das Steuergerät mit dem Kompressor 10 bzw. dessen Elektromotor steuerungstechnisch gekoppelt, so dass in Abhängigkeit der über die Druck- und/oder Temperatursensoren 62 erfassten Daten eine entsprechende Steuerung des Klimatisierungssystems erfolgt. Diese Steuerung erfolgt vollständig intern im Steuergerät, so dass zum Betrieb und zur Steuerung des Klimatisierungssystems keine fahrzeugseitige Steuerung erforderlich ist. Dennoch ist ein Datenaustausch mit dem fahrzeugseitigen Steuergerät zweckmäßig, damit die Steuerung des Klimatisierungssystems Betriebsdaten des Fahrzeugs berücksichtigen kann. Für diesen Datenaustausch ist die Kommunikationsschnittstelle 18 vorgesehen.

Indem nur eine einzige zentrale Kommunikationsschnittstelle 18 bereitgestellt wird, die vorzugsweise ausschließlich zum Datenaustausch, beispielsweise über das standardisierte CAN-Bus-Protokoll, dient, kann das in den Zeichnungen dargestellte Modul bzw. Klimatisierungssystem im Wesentlichen autark betrieben und so in unterschiedliche Fahrzeugtypen integriert werden. Eine Anpassung an das fahrzeugseitige Steuergerät ist damit nicht notwendig. Das vereinfacht den Einsatz des Klimatisierungssystems erheblich.

Für die Stromversorgung des Kompressors 10 bzw. des Elektromotors im Kompressor 10 ist vorzugsweise ein Stromanschluss 19 vorgesehen. Der Stromanschluss 19 ist vorzugsweise standardisiert, um universell in unterschiedliche Fahrzeugtypen integriert zu werden. Wie in Fig. 2 erkennbar ist, sind die Kommunikationsschnittstelle 18 und der Stromanschluss 19 im Wesentlichen unterhalb bzw. parallel zu den Wärmetauschern 20, 30 angeordnet. Vorzugsweise sind die Kommunikationsschnittstelle 18 und der Stromanschluss 19 in einem Freiraum angeordnet, der sich unterhalb des Kompressors 10 und hinter den Wärmetauschern 20, 30 erstreckt. Damit wird ein besonders kompakter Aufbau des Klimatisierungssystems erreicht.

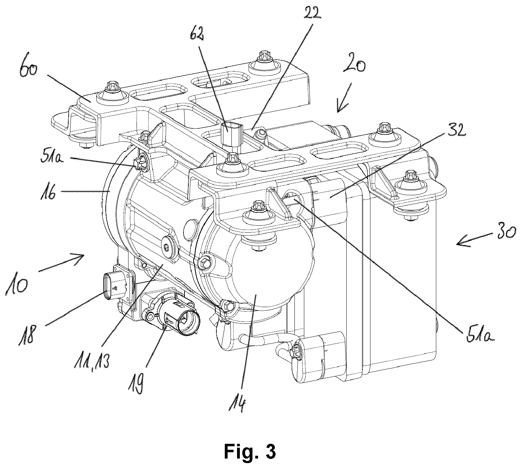

Fig. 3 zeigt das Klimatisierungssystem mit dem Kompressor 10 und den Wärmetauschern 20, 30, wobei zusätzliche eine Halteeinrichtung 60 vorgesehen ist. Die Halteeinrichtung 60 ist vorzugsweise mit dem Kompressor 10 schraubverbunden. Mittels der Halteeinrichtung 60 kann das Klimatisierungssystem in einem Fahrzeug positioniert und befestigt werden. Die Halteeinrichtung 60 ist dazu vorzugsweise mit einem fahrzeugseitigen Trägerbauteil verschraubt. Die Schrauben können über Vibrationsdämpfer 54 dämpfend von dem Kompressor isoliert sein. Die Halteeinrichtung 60 umfasst mehrere Öffnungen bzw. Ausnehmungen, insbesondere Langlöcher, so dass die Halteeinrichtung 60 universell in unterschiedlichen Fahrzeugtypen montierbar ist.

Die Fig. 4 und 5 zeigen eindrücklich die Kompaktheit des erfindungsgemäßen Klimatisierungssystems. Durch die Anordnung der Wärmetauscher 20, 30 am Kompressor 10 wird erreicht, dass das gesamte Klimatisierungssystem in einem Quader eingepasst werden kann, dessen Seitenlängen besonders klein sind. Damit lässt sich das Klimatisierungssystem in unterschiedliche Fahrzeuge, die sich insbesondere durch den zur Verfügung stehenden Bauraum unterscheiden, einsetzen.

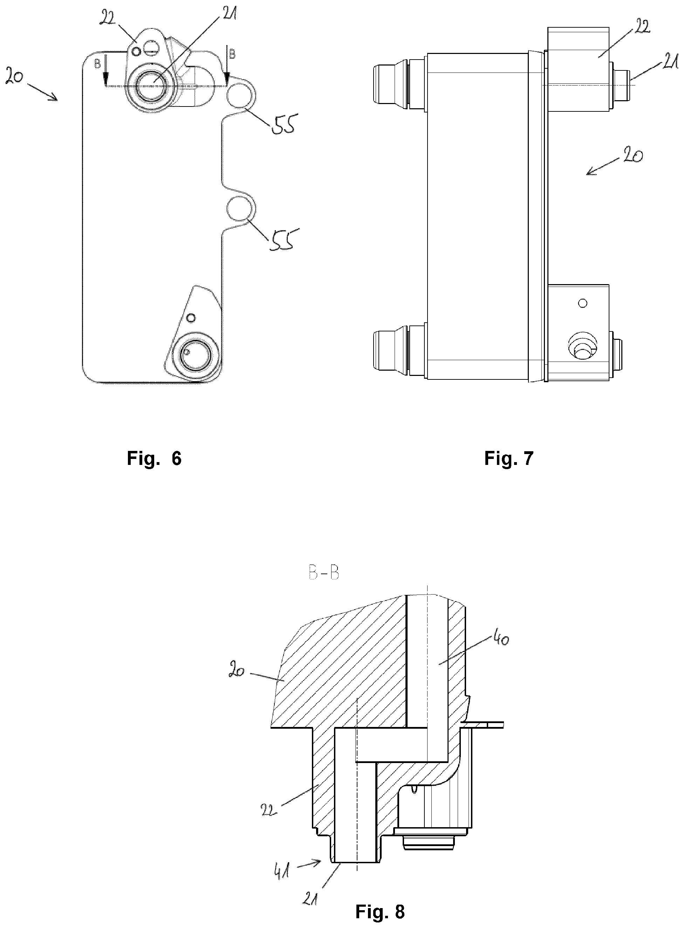

In den Fig. 6 bis 8 ist im Detail ein Wärmetauscher 20, 30, konkret der erste Wärmetauscher 20 gezeigt. Der erste Wärmetauscher 20 umfasst ein Anschlussstück 22 und einen Fluidanschluss 21. Der Fluidanschluss 21 kann mit einem entsprechenden Gegenanschluss am Gehäuse 11 des Kompressors 10 steckverbindbar sein. Vorzugsweise ist zwischen dem Fluidanschluss 21 des ersten Wärmetauschers 20 und dem Fluidanschluss des Kompressors 10 eine Dichtung angeordnet. Erkennbar sind in Fig. 6 auch die beiden seitlich vorstehenden Befestigungsösen 55, durch welche die Befestigungsschrauben 51b geführt werden, um den ersten Wärmetauscher 20 mit dem Kompressor 10 mechanisch zu verbinden.

Fig. 8 zeigt einen Schnitt entlang der Linie B-B aus Fig. 6. Es ist erkennbar, dass der Fluidanschluss 21 des ersten Wärmetauschers 20 eine Mündung eines Fluidkanals 40 bildet. Der Fluidkanal 40 ist dabei doppelt gekrümmt. Der Fluidkanal 40 weist insoweit eine doppelte Kröpfung auf. Die Mündung des Fluidkanals 40, nämlich der Fluidanschluss 21, des ersten Wärmetauschers 20 ist mit einem verringerten Außendurchmesser gebildet, so dass der Fluidanschluss 21 des ersten Wärmetauschers 20 in einen Fluidauslass des Kompressors 10 eingesteckt werden kann. So kann eine Steckverbindung zwischen dem ersten Wärmetauscher 20 und dem Kompressor 10 hergestellt werden. Die Steckverbindung ist vorzugsweise fluiddicht abgedichtet. An der Verbindungsstelle 41, die im Bereich des Fluidanschlusses 21 des ersten Wärmetauschers 20 ausgebildet ist, kann daher eine Dichtung vorgesehen sein. Die Dichtung ist vorzugsweise gas- und flüssigkeitsdicht. Auf diese Weise ist eine fluiddichte Kopplung zwischen dem ersten Wärmetauscher 20 und dem Gehäuse 11 des Kompressors 10 gewährleistet.

Zur Montage kann der Fluidanschluss 21 genutzt werden, um den Wärmetauscher 20 zunächst provisorisch mit dem Kompressor 10 zu verbinden, auszurichten und zu zentrieren. Die eigentliche Fixierung des Wärmetauschers 20, 30 am Gehäuse 11 des Kompressors 10 erfolgt vorzugsweise über die Befestigungsschrauben 51b. Dabei sind die entsprechenden Aufnahmen 52 direkt am Kompressor 10 integriert, insbesondere in ein das Gehäuse 11 des Kompressors 10 bildende Gussteil. Durch die Verwendung der Vibrationsdämpfer 54 ist die Verbindung zwischen Wärmetauscher 20 und Kompressor 10 elastisch ausgeführt. Die zuvor beschriebene Montageart gilt sowohl für das Anbringen des ersten Wärmetauschers 20, als auch das Anbringen des Wärmetauschers 30.

### Bezugszeichenliste

- 10: Kompressor
- 11: Gehäuse
- 12: Verdichtereinheit
- 13: Ansaugbereich
- 14: Hochdruckbereich
- 16: Anschlussbereich
- 17: erste Sensoraufnahme
- 18: Kommunikationsschnittstelle
- 19: Stromanschluss

- 20: erster Wärmetauscher
- 21: Fluidanschluss des ersten Wärmetauschers
- 22: Anschlussstück des ersten Wärmetauschers
- 23: Nachfüllstutzen

- 30: zweiter Wärmetauscher
- 32: Anschlussstück des zweiten Wärmetauschers
- 33: zweite Sensoraufnahme

- 40: Fluidkanal
- 41: Verbindungsstelle

- 50: Verbindungseinrichtung
- 51: Schraube
- 51a: Anschlussschraube
- 51b: Befestigungsschraube
- 52: Aufnahme
- 53: Schraubenkopf
- 54: Vibrationsdämpfer
- 55: Befestigungsösen
- 60: Halteeinrichtung
- 62: Druck- und/oder Temperatursensor

## Patentansprüche

1. Klimatisierungssystem, insbesondere für Fahrzeuge, insbesondere Elektro- oder Hybridfahrzeuge, mit einem Kompressor (10) und wenigstens einem Wärmetauscher (20, 30), der zur Bildung eines Kältemittelkreislaufs mit dem Kompressor (10) fluiddicht verbunden ist, wobei der Kompressor (10) ein Gehäuse (11) aufweist, in dem eine Verdichtereinheit (12) zum Verdichten des Kältemittels angeordnet ist, wobei das Gehäuse (11) auf einer Saugseite der Verdichtereinheit (12) einen Ansaugbereich (13) und auf einer Druckseite der Verdichtereinheit (12) einen Hochdruckbereich (14) aufweist, und wobei der wenigstens eine Wärmetauscher (20, 30) mit dem Ansaugbereich (13) und/oder dem Hochdruckbereich (14) gekoppelt ist, **dadurch gekennzeichnet, dass**
der Wärmetauscher (20, 30) so an dem Kompressor (10) befestigt ist, dass der Kompressor (10) den Wärmetauscher (20, 30) mechanisch trägt, wobei zwei Wärmetauscher (20, 30) vorgesehen sind, und wobei ein erster Wärmetauscher (20) mit dem Ansaugbereich (13) und ein zweiter Wärmetauscher (30) mit dem Hochdruckbereich (14) des Kompressors (10) fluiddicht verbunden ist.

2. Klimatisierungssystem nach Anspruch 1
**dadurch gekennzeichnet, dass**
der Wärmetauscher (20, 30), insbesondere jeweils der erste Wärmetauscher (20) und/oder der zweite Wärmetauscher (30), wenigstens einen Fluidanschluss (21, 31) aufweist, der direkt, insbesondere adapterfrei, und fluiddicht mit einem Fluidanschluss des Kompressors (10) verbunden ist.

3. Klimatisierungssystem nach einem der vorhergehenden Ansprüche
**dadurch gekennzeichnet, dass**
zwischen dem Kompressor (10) und dem Wärmetauscher (20, 30) ein Fluidkanal (40) ausgebildet ist, der höchstens eine, insbesondere eine einzige, Verbindungsstelle (41) aufweist.

4. Klimatisierungssystem nach Anspruch 3
**dadurch gekennzeichnet, dass**
die Verbindungsstelle (41), insbesondere mittels einer Dichtung, fluiddicht abgedichtet ist.

5. Klimatisierungssystem nach einem der vorhergehenden Ansprüche
**dadurch gekennzeichnet, dass**
der Wärmetauscher (20, 30) durch mechanische Verbindungseinrichtungen (50) an dem Kompressor (10) direkt befestigt ist, wobei integral am Kompressor (10) und/oder am Wärmetauscher (20, 30) Aufnahmen (52) für die direkte kraft- und/oder formschlüssige Aufnahme der Verbindungseinrichtungen (50) ausgebildet sind.

6. Klimatisierungssystem nach Anspruch 5
**dadurch gekennzeichnet, dass**
die Verbindungseinrichtungen (50) Schrauben (51) aufweisen.

7. Klimatisierungssystem nach Anspruch 6
**dadurch gekennzeichnet, dass**
wenigstens eine Schraube (51), insbesondere eine Befestigungsschraube (51b), in ein Gewinde eingreift, das direkt in dem Gehäuse (11) des Kompressors (10) und/oder in einem Anschlussstück (22, 32) des Wärmetauschers (20, 30) ausgebildet ist.

8. Klimatisierungssystem nach Anspruch 6 oder 7
**dadurch gekennzeichnet, dass**
der Wärmetauscher (20, 30) mittels wenigstens zwei, insbesondere drei, Schrauben (51) an dem Kompressor (10) befestigt ist, wobei eine Anschlussschraube (51a) in ein Anschlussgewinde eingreift, das in das Anschlussstück (22, 32) des Wärmetauschers (20, 30) integriert ist, und wenigstens eine Befestigungsschraube (51b) in jeweils ein Befestigungsgewinde eingreift, das in das Gehäuse (11) des Kompressors (10) integriert ist.

9. Klimatisierungssystem nach einem der Ansprüche 5 bis 8
**dadurch gekennzeichnet, dass**
zumindest ein Teil der Verbindungseinrichtungen (50) Vibrationsdämpfer (54) aufweist.

10. Klimatisierungssystem nach Anspruch 9
**dadurch gekennzeichnet, dass**
die Vibrationsdämpfer (54) jeweils zwischen einem Schraubenkopf (53) und dem Wärmetauscher (20, 30) oder dem Kompressor (10) angeordnet sind.

11. Klimatisierungssystem nach Anspruch 9 oder 10
**dadurch gekennzeichnet, dass**
die Vibrationsdämpfer (54) als Kunststoff- oder Gummidämpfer ausgebildet sind.

12. Klimatisierungssystem nach einem der vorhergehenden Ansprüche
**dadurch gekennzeichnet, dass**
der Kompressor (10) mit dem wenigstens einen Wärmetauscher (20, 30) ein einheitlich handhabbares Modul bildet, das über eine Halteeinrichtung (60) mit dem Fahrzeug verbindbar ist, welche unabhängig vom Kältemittelkreislauf ausgebildet ist.

13. Klimatisierungssystem nach Anspruch 12
**dadurch gekennzeichnet, dass**
zwischen dem Kompressor (10) und der Halteeinrichtung (60) wenigstens ein Vibrationsdämpfer (54) angeordnet ist.

14. Fahrzeug, insbesondere Elektrofahrzeug oder Hybridfahrzeug, mit einem Klimatisierungssystem nach einem der vorhergehenden Ansprüche.
